# EUROPÄISCHE PATENTSCHRIFT

(11) **EP 0 746 675 B1**
(45) Veröffentlichungstag und Bekanntmachung des Hinweises auf die Patenterteilung: **22.03.2000**
(21) Anmeldenummer: 95942672.7
(22) Anmeldetag: 15.12.1995
(51) Int. Cl.: F01N 3/20, F02D 41/06

(54) **VERFAHREN ZUR STEUERUNG EINER MEHRZYLINDER-BRENNKRAFTMASCHINE IN DER KALTSTART- UND WARMLAUFPHASE**
PROCESS FOR CONTROLLING A MULTIPLE CYLINDER INTERNAL COMBUSTION ENGINE IN THE COLD START AND WARMING UP PHASES
PROCEDE DE COMMANDE DE MOTEUR A COMBUSTION INTERNE A PLUSIEURS CYLINDRES DANS LES PHASES DE DEMARRAGE A FROID ET D'ECHAUFFEMENT

(30) Priorität: 21.12.1994 DE 4445779
(43) Veröffentlichungstag der Anmeldung: 11.12.1996
(73) Patentinhaber: FEV Motorentechnik GmbH, 52078 Aachen (DE)
(72) Erfinder: ESCH, Thomas, D-52070 Aachen (DE); PISCHINGER, Martin, D-52072 Aachen (DE); SALBER, Wolfgang, D-52080 Aachen (DE)
(74) Vertreter: Langmaack, Jürgen, Dipl.-Ing.
(86) Internationale Anmeldenummer: EP9504969
(87) Internationale Veröffentlichungsnummer: WO9619646

(56) Entgegenhaltungen:
- EP-A- 0 376 714
- DE-A- 2 749 742
- DE-A- 4 029 672
- GB-A- 1 493 308
- US-A- 4 700 684
- PATENT ABSTRACTS OF JAPAN vol. 15, no. 194 (M-1114), 20.Mai 1991 & JP,A,03 050380 (YAMAHA MOTOR CO LTD), 4.März 1991,
- PATENT ABSTRACTS OF JAPAN vol. 16, no. 452 (M-1313), 21.September 1992 & JP,A,04 159428 (NISSAN MOTOR CO LTD), 2.Juni 1992,

## Beschreibung

Aufgrund der starken Umwelteinflüsse der Abgasemissionen von Brennkraftmaschinen werden die Anforderungen an das Emissionsverhalten moderner Brennkraftmaschinen immer größer. Neben der Senkung der Abgasemission durch Sekundärmaßnahmen, wie zum Beispiel die Verwendung von Katalysatoren, ist auch eine deutliche Reduzierung der primären, motorseitig erzeugten Schadstoffrohemission erforderlich.

Wesentlichen Einfluß auf das Schadstoffverhalten haben dabei der Normalbetrieb mit schnellen Motordrehzahlwechseln und Motorlastwechseln einerseits und der Betrieb bei kaltem Motor. Nach den gesetzlich vorgeschriebenen Testzyklen zur Untersuchung von Motoren sind die ersten 60 bis 80 Sekunden der Startphase eines kalten Motors entscheidend für eine Unterschreitung der Abgasgrenzwerte. Bis zu 80% der im gesamten Testzyklus emittierten unverbrannten Kohlenwasserstoffe werden in diesem Zeitraum bei einer Motorstarttemperatur von 25° freigesetzt. Kalte Saugrohrwände und Brennraumwände, die höhere zu überwindende Reibleistung und der nicht betriebswarme Katalysator, bei dem die Kovertierungsraten im betriebskalten Zustand noch sehr gering sind, stellen nur einige Faktoren dar, welche die Kohlenwasserstoffemission und die Kohlenmonoxidemission drastisch ansteigen lassen. Bei Umgebungstemperaturen unter 0°C tritt in der Kaltstart- und Warmlaufphase eine weitere deutliche Zunahme der Schadstoffemission auf.

Man hat eine Reihe von Möglichkeiten zur Reduzierung der Schadstoffemissionen bereits verwirklicht, die jedoch vorwiegend nur beim betriebswarmen Motor wirksam werden. Neben der konstruktiven Maßnahme, wie beispielsweise die Gestaltung von Zylinderkopf und Brennraum, Lage der Zündkerzen und Einspritzdüsen, Anzahl der Ventile, Hubvolumen, Hub-Bohrungsverhältnis, Verdichtungsverhältnis, Ein- und Auslaßkanalgestaltung, läßt sich auch durch operative Maßnahmen die primäre Schadstoffentstehung beeinflussen. Hierzu sind Faktoren wie Gemischbildung, Zündzeit- und Einspritzzeitpunkt, Steuerzeiten, interne Restgasrückführung durch Steuerzeitänderungen, externe Abgasrückführung, Abschaltung der Kraftstoffzufuhr während der Schubbetriebsphasen und der Einsatz eines Latentwärmespeichers zur Nutzung der "Abfallwärme" des Motors gegeben. Auch durch motorexterne Maßnahmen im Abgasbereich, wie beispielsweise eine Abgasnachbehandlung durch Katalysatorsysteme, Isolierung von Auslaßkrümmer und Abgassystem sowie der Einsatz von thermischen Reaktoren, lassen sich Reduzierungen der Kohlenwasserstoffemissionen erreichen. Die motorexterne Einblasung von Sekundärluft in der Kaltstart- und Warmlaufphase fördert die Nachreaktion von unverbrannten Kohlenwasserstoffen und Kohlenmonoxiden im Abgassystem und führt aufgrund der bei der Oxidation freigesetzten Wärme zusätzlich zu einer schnelleren Aufheizung des Katalysators. Bei konventionellen Motoren geschieht dieses durch eine zusätzliche Sekundärluftpumpe, die von einem Elektromotor oder von der Brennkraftmaschine selbst angetrieben werden muß.

Der Erfindung liegt nun die Aufgabe zugrunde, ein Verfahren zur Steuerung einer derartigen Mehrzylinder-Brennkraftmaschine für die Kaltstart- und Warmlaufphase zu schaffen, die zu einer Reduzierung der Schadstoffemissionen gerade in dieser Betriebsphase eines Motors führt.

Diese Aufgabe wird erfindungsgemäB gelöst durch das im Anspruch 1 angegebene Verfahren zur Steuerung einer Mehrzylinder-Brennkraftmaschine.

Damit ist es möglich, ohne Zusatzaggregate einen oder mehrere Zylinder des Motors als "heiße Sekundärluftpumpe" arbeiten zu lassen und die hierdurch bereitgestellte heiße Luft zur Nachreaktion der unverbrannten Kohlenwasserstoffe und Kohlenmonoxide im Abgassystem zu verwenden. Dies wird dadurch möglich, daß durch unabhängig voneinander aber abgestimmt aufeinander ansteuerbare Ein- und Auslaßvorrichtungen und bei abschaltbarer Einspritzung zu den einzelnen Zylindern abhängig von den Steuerzeiten der Einlaßvorrichtung und der Auslaßvorrichtung bedarfsgerecht eine dosierte Luftmenge in das Abgassystem eingeleitet werden kann. Dies kann sowohl bei jeder Kurbelwellenumdrehung als auch nach mehreren Umdrehungen erfolgen. Bei einem frühen Öffnen des Auslaßventils im Bereich der Kompressionsendphase kann zusätzlich das hohe Temperaturniveau der verdichteten Luft zur schnelleren Aufheizung des Katalysators genutzt werden und die Nachreaktion im Abgassystem zusätzlich gefördert werden. Ein weiterer Vorteil besteht darin, daß die als Motor arbeitenden Zylinder, die den oder die als Verdichter arbeitenden Zylinder antreiben müssen, höher belastet sind, so daß hier eine schnellere Aufheizung sowohl der brennraumnahen Bereiche als auch eine schnellere Aufheizung des Abgassystems durch höhere Abgastemperaturen erfolgt. In besonders zweckmäßiger Ausgestaltung der Erfindung ist hierbei vorgesehen, daß die Kraftstoffzufuhr zu den einzelnen Zylindern wechselnd umgeschaltet wird. Durch die wechselnde Nutzung der Zylinder als "Motor" und als "Luftpumpe" werden in dieser Phase nacheinander alle Zylinder in den Motorbetrieb mit einbezogen und entsprechend der höheren thermischen Belastung aufgeheizt, und somit ein Auskühlen der brennraumumgebenden Zylinderwände verhindert. Damit kann der Gefahr eines frühzeitigen Verlöschens der Flamme an den kalten Brennraumwänden entgegengewirkt und so die Kohlenwasserstoffemission vermindert werden. Die Kosten und der Bauraum einer zusätzlichen Sekundärluftpumpe werden bei einer derartigen Betriebsweise eingespart. Die Kraftstoffeinspritzung kann in den Luftansaugkanal oder direkt in den Zylinder erfolgen.

Aus DE-A-4 029 672 ist eine mehrzylindrige Brennkraftmaschine mit herkömmlichen mechanisch zwangsgesteuerten Ventiltrieben bekannt, die mit einer Motorsteuerung versehen ist, die es erlaubt, zu einzelnen ausgewählten Zylindern die Kraftstoffzufuhr abzuschalten und diese unbefeuert zu lassen, während die übrigen Zylinder weiter befeuert werden, um mit entsprechendem Drehmoment die Drehung der Kurbelwelle aufrecht zu erhalten. Die nicht befeuerten Zylinder arbeiten dann als Luftpumpe und die von diesem Zylinder angesaugte Luft wird dann entsprechend der Taktfolge der Gaswechselventile in das Abgassystem ausgeschoben. Damit wird jedoch immer mindestens das volle Luftvolumen eines Zylinders in das Abgassystem ausgeschoben. Da derartige Brennkraftmaschinen im Viertaktverfahren beschrieben werden, hat das zur Folge, daß bei der Abschaltung der Kraftstoffzufuhr zu einem Zylinder immer nur nach jeweils zwei Kurbelwellenumdrehungen dieses Luftvolumen in das Abgassystem ausgeschoben wird. Damit ergeben sich erhebliche Schwankungen im Luftüberschuß im Abgassystem. Das Abschalten der Kraftstoffzufuhr zu wenigstens einem weiteren Zylinder hat dann allerdings zur Folge, daß der Motor mit einem sehr viel stärkeren Ungleichförmigkeitsgrad arbeitet.

Aus US-A-4 700 684 ist eine Kolbenbrennkraftmaschine bekannt, die mit unabhängig ansteuerbaren Gaswechselventilen versehen ist. Hier ist ein Verfahren für den normalen Motorbetrieb beschrieben, bei dem durch eine entsprechende Anpassung der Öffnungs- und Schließzeiten der Gaseinlaßventile im Verhältnis zu den Gasauslaßventilen Einfluß genommen werden kann auf das abgegebene Motordrehmoment und/oder auf die Ladungszusammensetzung, insbesondere in Verbindung mit einer Gasrückführung und/oder die Ladungsbewegung in den Zylindern. Die Möglichkeit, mit einer derartigen voll variablen Ventilsteuerung auch den Motorbetrieb in der Kaltstartphase zur Beeinflussung der Oxidationsbedingungen im Abgassystem zu verbessern, ist nicht vorgesehen.

In einer Ausgestaltung der Erfindung ist vorgesehen, daß beim Starten über einen Hilfsantrieb während der ersten Umdrehungen die Einlaßvorrichtungen und/oder die Auslaßvorrichtungen offengehalten werden. Die aufzubringende Startleistung durch das Hilfsaggregat, üblicherweise ein Anlasser, wird damit deutlich kleiner. Dieses führt zu kleineren, kosten- und gewichtsgünstigeren Hilfsaggregaten für den Startvorgang, für die dann auch die bereitzustellende Energie und damit die Größe der Batterie reduziert wird.

In weiterer vorteilhafter Ausgestaltung des erfindungsgemäßen Verfahrens ist vorgesehen, daß zur Unterstützung der Kraftstoff-Luft-Gemischaufbereitung die Einlaßvorrichtungen jeweils angepaßt in Richtung "spät" geöffnet werden. Hierdurch wird das Problem der verschlechterten Gemischbildungsbedingungen bei Brennkraftmaschinen mit externer Gemischbildung während der Kaltstart- und Warmlaufphase verhindert. Durch das niedrige Temperaturniveau der Zylinderladung und der Ansaugkanalwände wird nämlich die Zerstäubungsqualität des Gemischbildners deutlich verschlechtert. Durch die erfindungsgemäß vorgeschlagene Ausgestaltung kann nun der Gemischbildungsvorgang durch ein spätes öffnen der Einlaßvorrichtungen wesentlich verbessert werden. Durch ein unkonventionelles "spätes Einlaß öffnet" wird die Einlaßvorrichtung erst geöffnet, wenn der Kolben sich in der Abwärtsbewegung dem unteren Totpunkt nähert. Beim Öffnen der Einlaßvorrichtung setzt durch den dann vorhandenen Unterdruck im Brennraum eine starke Beschleunigung der Luftsäule mit dem bereits eingespritzten Kraftstoff ein. Die große Relativbewegung zwischen Kraftstoff und Luft sowie die erhöhte Gemischbewegung im Brennraum fördert die Gemischaufbereitung und führt zu einer deutlich verbesserten Verbrennung. In der weiteren Phase des Motorwarmlaufs kann dann eine übliche betriebspunktabhängige Optimierung des Restgasanteils durch eine Kombinatorik der Ventilsteuerparameter "Einlaß öffnet" und "Auslaß schließt" den Warmlaufvorgang verbessern. Durch ein "frühes Auslaß öffnet" wird durch die ausströmenden heißen Abgase die Temperatur im Abgassystem zusätzlich erhöht. Durch eine Anpassung der Steuerzeit "Auslaß öffnet" kann somit ebenfalls die Nachreaktionen im Abgassystem sowie die Aufheizphase für den Katalysator verkürzt werden.

Die Erfindung wird anhand schematischer Zeichnungen eines Ausführungsbeispiels näher erläutert. Es zeigen:
- Fig. 1: ein Schalt- und Steuerschema für einen Zylinder einer Mehrzylinder-Brennkraftmaschine,
- Fig. 2: ein Fließschema,
- Fig. 3: ein Massenstromdiagramm für eine spät öffnende Einlaßvorrichtung,
- Fig. 4: die Einströmgeschwindigkeit der Luft in einen Zylinder mit zwei unabhängig voneinander ansteuerbaren Einlaßvorrichtungen.

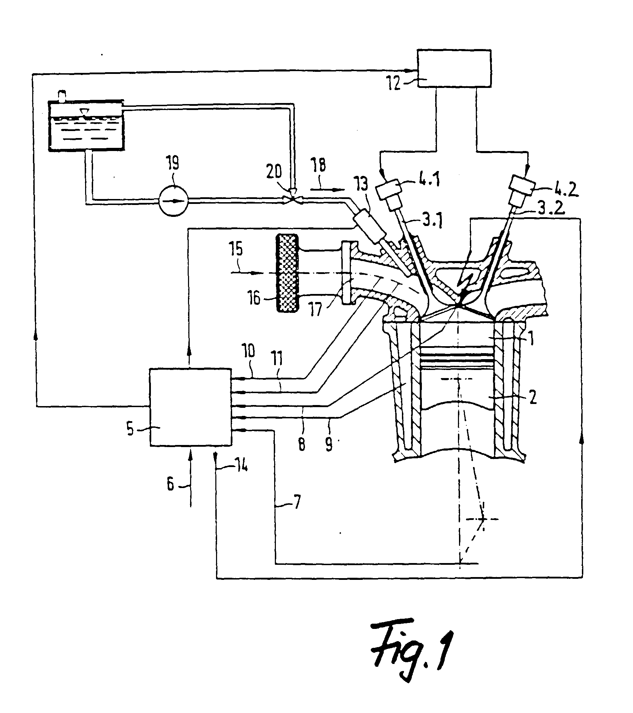

Fig. 1 zeigt schematisch einen Teilschnitt durch den Brennraumbereich eines Zylinders eine Mehrzylinder-Brennkraftmaschine. In dem Zylinderrohr 1 bewegt sich ein Kolben 2. Im Zylinderkopf ist eine Einlaßvorrichtung 3.1 und eine Auslaßvorrichtung 3.2 angesordnet, die beide jeweils mit einer Stellvorrichtung 4.1 und einer Stellvorrichtung 4.2 versehen sind, durch die die Einlaß-bzw. Auslaßvorrichtung jeweils geöffnet und geschlossen werden kann. Die Stellvorrichtungen, die beispielsweise als elektromagnetisch betätigbare Stellvorrichtungen ausgebildet sein können, sind an eine Steuerlogik 5 angeschlossen, in der Motorkennfelder für verschiedene Betriebszustände in Form von Steuerzeiten für die Einlaß- und Auslaßvorrichtungen sowie für die Kraftstoffeinspritzung und die Zündung gespeichert sind. Diese Daten werden aufgrund des Steuereingangs 6, der Drehzahlinformation 7, der Motortemperatur 8, der Kühlwassertemperatur 9 des Druckes 10 und der Temperatur 11 der Verbrennungsluft abgerufen und einer Verstärkerstufe 12 zur Ansteuerung der Einlaß- und Auslaßvorrichtungen, der Einspritzdüse 13 und der Zündung 14 entsprechend dem Motorzyklus zugeleitet. Dadurch stellt sich ein Luftmassenstrom 15 durch den Filter 16 im drosselfreien Saugrohr 17 und der Kraftstoffstrom 18 aus dem Kraftstoffbehälter über die Pumpe 19 und das Drucksteuerventil 20 ein. Die Steuerlogik 5 weist nun ein Motorkennfeld "Kaltstartphase" auf, das so ausgelegt ist, daß während der Kaltstartphase zu einzelnen Zylindern die Kraftstoffzufuhr abgeschaltet und die Steuerzeiten der Einlaßvorrichtung 3.1 und der Auslaßvorrichtung 3.2 abweichend von der normalen Betriebssteuerzeiten vorgegeben werden können.

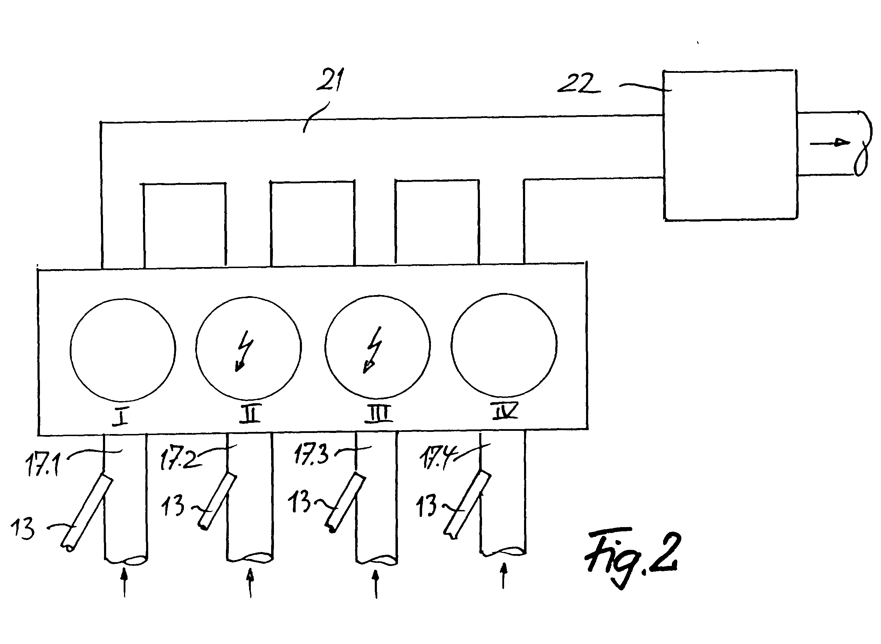

Die Steuerung in dieser Kaltstart- und in der anschließenden Warmlaufphase wird in Fig. 2 anhand eines Vierzylindermotors näher erläutert. Die einzelnen Zylinder I, II, III und IV sind ansaugseitig jeweils mit Saugrohren 17.1, 17.2, 17.3 und 17.4 versehen, in die jeweils eine entsprechende Einspritzdüse 13 einmündet. Die aus den einzelnen Zylindern austretenden heißen Abgase werden über ein Abgasrohr 21 abgeleitet, in dem ein Katalysator 22 angeordnet ist.

Beim Kaltstart dieses Verbrennungsmotors werden nun über die Steuerlogik 5 zunächst sowohl die Einlaßvorrichtungen 3.1 als auch die Auslaßvorrichtungen 3.2 zu allen Zylindern offengehalten, so daß über den elektrischen Anlasser der Motor zunächst mit geringem Kraftaufwand in Drehung versetzt werden kann. Nach Erfassung einer vorgegebenen Mindestdrehzahl werden nun die Einlaß- und die Auslaßvorrichtungen der einzelnen Zylinder zykluskonform in Betrieb gesetzt, wobei jedoch lediglich in die Ansaugrohre 17.2 und 17.3 zu den Zylindern II und III Kraftstoff eingespritzt und entsprechend dem Arbeitstakt die Zündung zugeschaltet wird, so daß nur die Zylinder II und III als Motor arbeiten. Die Zylinder I und IV saugen nur Luft an, die entsprechend dem Arbeitszyklus verdichtet und hierbei aufgeheizt wird. Dementsprechend tritt in das Abgasrohr 21 entsprechend den Arbeitstakten aus den als Motor arbeitenden Zylindern II und III heißes Abgas und aus den als Verdichter arbeitenden Zylindern I und IV heiße Luft in das Abgasrohr 21 ein. Da die Zylinder II und III gleichzeitig die Verdichterarbeit der Zylinder I und IV aufbringen müssen, werden diese aufgrund der zu leistenden Arbeit höher belastet, so daß heißeres Abgas anfällt, das jedoch aufgrund der ungünstigen Temperaturbedingungen während der ersten Arbeitszyklen einen hohen Anteil an unverbrannten Kohlenwasserstoffen und an Kohlenmonoxid enthält. Da gleichzeitig jedoch aus den Zylinder I und IV heiße Luft in das Abgasrohr eintritt, wird der Katalysator 22 aufgrund der Reaktionswärme der Nachreaktion schneller aufgeheizt und die Kohlenwasserstoff- und Kohlenmonoxidemission reduziert. Durch die höheren Abgastemperaturen setzen die erforderlichen Nachreaktionen zum Abbau der unverbrannten Kohlenwasserstoffe sowie des Kohlenmonoxids sehr viel früher ein.

Aufgrund der Tatsache, daß die Einlaßvorrichtungen und Auslaßvorrichtungen der einzelnen Zylinder unabhängig voneinander ansteuerbar sind, kann nun in dieser ersten Anlaufphase über die Steuerlogik 5 die Schaltung so vorgenommen werden, daß nicht ausschließlich die Zylinder II und III als Motor und die Zylinder I und IV als Verdichter arbeiten, sondern daß die Zylinder jeweils abwechselnd als Motor oder Verdichter arbeiten. Hierdurch wird dann erreicht, daß alle Zylinder sehr viel schneller ihre Betriebstempeatur erreichen und letztlich über die sehr viel schnellere Erwärmung des gesamten Systems die Schadstoffemission während der Startphase reduziert wird.

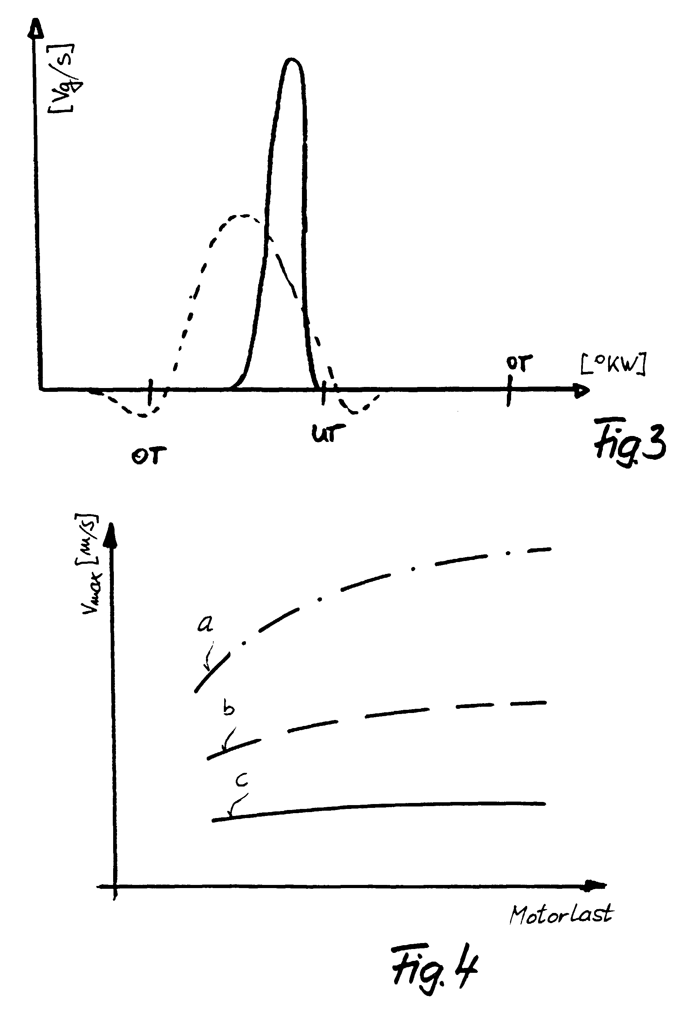

Aufgrund der variablen Ansteuerungsmöglichkeit der einzelnen Einlaß- und Auslaßvorrichtungen besteht auch für die jeweils als Motor arbeitenden Zylinder die Möglichkeit, auch in kaltem Zustand die Gemischbildung zu verbessern, in Fig. 3 ist der Massenstrom durch eine Einlaßvorrichtung in Abhängigkeit vom Kurbelwinkel dargestellt. Die gestrichelte Linie zeigt den Massenstrom bei einer konventionellen Drosselregelung. Wird nun entsprechend der Ausgestaltung des erfindungsgemäßen Verfahrens jeweils die Einlaßvorrichtung 3.1 geöffnet, wenn der Kolben sich in der Abwärtsbewegung der unteren Totpunktstellung nähert, entsteht im Zylinder ein sehr starker Unterdruck, so daß die einzusaugende Luftmenge innerhalb kurzer Zeit, d. h. mit hoher Geschwindigkeit in den Brennraum einströmen muß, so daß hier eine erhebliche Verwirbelung stattfindet. Der zugehörige Massenstrom für diese spezielle Ansteuerung der Einlaßvorrichtung ist schematisch in Fig. 3 im Vergleich zur normalen Drosselregelung durch eine ausgezogene Linie dargestellt.

In Fig. 4 ist ferner für verschiedene Betriebszustände, ausgehend von der Kaltstartphase bis zur normalen Betriebsphase, die Eintrittsgeschwindigkeit des Kraftstoff-Luft-Gemisches in einen Brennraum eines Motors mit jeweils zwei Einlaßvorrichtungen je Zylinder dargestellt. Die Einlaßvorrichtungen sind wiederum unabhängig voneinander ansteuerbar, wobei zumindest eine Einlaßvorrichtung mit zwei unterschiedlichen Hüben arbeiten kann.

Beim Starten des Motors werden für die im Motorbetrieb arbeitenden Zylinder jeweils eine Einlaßvorrichtung geschlossen und die andere Einlaßvorrichtung mit reduziertem Hub betrieben. Hierbei ergibt sich dann in Abhängigkeit von der Motorlast eine Eintrittsgeschwindigkeit für das Kraftstoff-Luft-Gemisch, wie es schematisch durch die Kurve a angedeutet ist. Mit zunehmender Erwärmung des Motors und entsprechend vorgegeben durch die Steuerlogik 5 wird nun die Stellvorrichtung 4 der arbeitenden Einlaßvorrichtung 3 auf vollen Hub umgeschaltet, so daß aufgrund des größeren Querschnittes sich die Einströmgeschwndigkeit vermindert, wie dies schematisch in der Kurve b gezeigt ist. Sobald der Motor dann seine Betriebstemperatur erreicht hat, kann dann betriebspunktabhängig die zweite, bisher geschlossen gehaltene Einlaßvorrichtung mit ihrem vollen Hub ebenfalls betätigt werden, so daß sich die schematisch durch die Kurve c angedeutete Eintrittsgeschwindigkeit des Kraftstoff-Luft-Gemisches in den Brennraum ergibt. Über die Steuerlogik 5 wird dann entsprechend den sich ändernden Betriebsdaten des Motors während der Warmlaufphase auch der Zeitpunkt "Einlaß öffnet" an den Betriebspunkt angepaßt werden. Bei einer Brennkraftmaschine mit zwei Einlaßvorrichtungen, wie vorstehend beschrieben, kann, muß aber nicht, eine Verschiebung des Zeitpunktes "Einlaß öffnet" in der anhand von Fig. 3 beschriebenen Weise vorgenommen werden.

Während bei einem Vierzylindermotor durch die mögliche Ansteuerung von nur jeweils einem Zylinder im Pumpbetrieb die Laufruhe verschlechtert wird, können Motore mit höheren Zylinderzahlen so angesteuert werden, daß wahlweise und angepaßt an den Betriebspunkt neben einem Wechsel von Motorbetrieb auf Pumpbetrieb der jeweiligen Zylinder auch eine laufende Zuschaltung von Zylindern im reinen Motorbetrieb möglich ist. Die im Pumpbetrieb geförderte Luftmenge kann über die Zahl der als Pumpe arbeitenden Zylinder und/oder über die Steuerung der Einlaßzeiten der Einlaßvorrichtungen noch reguliert werden. Der Aggregatzustand der Drucktemperatur der in das Abgassystem abgegebenen Luft kann über eine entsprechende Ansteuerung der Auslaßvorrichtung beeinflußt werden.

Als Stellvorrichtungen zur unabhängigen Ansteuerung der Einlaß- und Auslaßvorrichtungen ist die Verwendung von elektromagnetischen Stellvorrichtungen, wie sie beispielsweise aus DE-A-30 24 109 bekannt sind, besonders vorteilhaft. Solange die beiden Elektromagnete stromlos gesetzt sind, werden über die beiden gegeneinander wirkenden Federelemente die Einlaßvorrichtungen über den zugehörigen Anker in einer Mittelstellung zwischen Öffner- und Schließerspule offengehalten. Im Betrieb schwingt dann der Anker zwischen der Öffner- und Schließerspule hin und her. Über die entsprechende Ansteuerung der Erregerströme zu den einzelnen Spulen kann somit die Steuerzeit kurbelwinkelunabhängig ausschließlich über die Steuerlogik 5 vorgegeben werden. Damit ist es auch möglich, noch während des Drehens des Motors über ein Hilfsaggregat die Einlaßvorrichtung und die Auslaßvorrichtung für alle Zylinder offen zu halten, ebenso wie in jeder gewünschten Kombinatorik die Öffnungs- und Schließzeiten der Einlaßvorrichtungen und der Auslaßvorrichtungen betriebsabhängig aufeinander abzustimmen. Damit ist es auch möglich, über die Steuerlogik 5 und die dort abgespeicherten Motorkennfelder mit zunehmender Erwärmung aus dem vorbeschriebenen Ansteuerungsverfahren für die Kaltstartphase in die Betriebsphase überzugehen, in der die Einlaßvorrichtungen und Auslaßvorrichtungen in ihren Steuerzeiten lastabhängig und aufeinander abgestimmt, angesteuert werden können.

## Patentansprüche

1. Verfahren zur Steuerung einer Mehrzylinder-Brennkraftmaschine mit innerer Verbrennung und Nachbehandlung der Abgase, wobei der Gasladungswechsel in den einzelnen Zylindern über Einlaßvorrichtungen für die Luft und Auslaßvorrichtungen für das Abgas erfolgt, die über eine Motorsteuerung unabhängig voneinander, aber mit aufeinander abstimmbaren Öffnungszeiten und Schließzeiten ansteuerbar sind, wobei beginnend in der Kaltstartphase bis in die Warmlaufphase die Zufuhr von Kraftstoff nur zu einem Teil der Zylinder erfolgt, die dann als Motor arbeiten, und die Zufuhr von Kraftstoff zum anderen Teil der Zylinder abgeschaltet wird, die dann als Verdichter arbeiten, und die in den als Verdichtern arbeitenden Zylindern durch den Kompressionsvorgang aufgeheizte Luft über eine angepaßte Ansteuerung der Auslaßvorrichtung in das Abgassystem in veränderbarer Menge und/oder unter veränderbarem Druck und/oder veränderbarer Temperatur zur Nachreaktion der Abgase eingeleitet wird.

2. Verfahren nach Anspruch 1, dadurch gekennzeichnet, daß die Kraftstoffzufuhr und Zündung zu den einzelnen Zylindern wechselnd umgeschaltet wird.

3. Verfahren nach Anspruch 1 oder 2, dadurch gekennzeichnet, daß beim Starten über einen Hilfsantrieb während der ersten Umdrehungen die Einlaßvorrichtungen und/oder die Auslaßvorrichtungen offengehalten werden.

4. Verfahren nach einem der Ansprüche 1 bis 3, dadurch gekennzeichnet, daß zur Unterstützung der Kraftstoff-Luft-Gemischaufbereitung die Einlaßvorrichtungen jeweils angepaßt in Richtung "spät" geöffnet werden.

5. Verfahren nach einem der Ansprüche 1 bis 4, dadurch gekennzeichnet, daß in der Kaltstart- und Warmlaufphase die Durchtrittsquerschnitte der Einlaßvorrichtungen und/oder der Auslaßvorrichtungen vermindert werden.

## Claims

1. A method for controlling a multi-cylinder internal combustion engine with internal combustion and subsequent treatment of the exhaust gases, wherein the gas exchange in the individual cylinders is effected by inlet means for the air and outlet means for the exhaust gas, which can be triggered independently of each other, but with opening times and closing times which can be matched to each other by means of an engine control means, wherein beginning in the cold-start phase and into the hot-running phase the supply of fuel is effected only to a portion of the cylinders, which then operate as an engine, and the supply of fuel to the other portion of the cylinders is switched off, which cylinders then operate as compressors, and the air heated by the compression in the cylinders which operate as compressors is introduced by suitable control of the outlet means into the exhaust gas system in a variable quantity and/or at variable pressure and/or variable temperature for subsequent reaction of the exhaust gases.

2. A method according to Claim 1, characterised in that the supply of fuel and ignition to the individual cylinders is switched over in alternating manner.

3. A method according to Claim 1 or 2, characterised in that upon starting the inlet means and/or the outlet means are kept open by means of an auxiliary drive during the first rotations.

4. A method according to one of Claims 1 to 3, characterised in that to support the fuel-air mixture preparation the inlet means are each opened in adapted manner in the "late" direction.

5. A method according to one of Claims 1 to 4, characterised in that in the cold-start and hot-running phase the passage cross-sections of the inlet means and/or of the outlet means are reduced.

## Revendications

1. Procédé de commande d'un moteur à combustion interne à plusieurs cylindres et à retraitement des gaz d'échappement, le changement de charge de gaz dans les différents cylindres ayant lieu au moyen de dispositifs d'admission pour l'air et de dispositifs d'échappement pour les gaz d'échappement, qui peuvent être commandés par une commande de moteur indépendamment les uns des autres, mais avec des temps d'ouverture et des temps de fermeture pouvant être adaptés les uns aux autres, l'alimentation en carburant n'ayant lieu, depuis la phase de démarrage à froid jusque dans la phase d'échauffement, que dans une partie des cylindres qui travaillent alors en moteurs, l'alimentation étant interrompue vers l'autre partie des cylindres qui travaillent alors en compresseurs, et l'air réchauffé par l'opération de compression dans les cylindres travaillant en compresseurs étant, pour la réaction consécutive des gaz d'échappement, introduit par une commande appropriée du dispositif d'échappement dans le système d'échappement en quantités variables et/ou avec une pression variable et/ou sous une température variable.

2. Procédé selon la revendication 1, caractérisé en ce que l'alimentation en carburant et l'allumage des différents cylindres sont commutés alternativement.

3. Procédé selon la revendication 1 ou 2, caractérisé en ce que lors du démarrage au moyen d'un entraînement auxiliaire les dispositifs d'admission et/ou les dispositifs d'échappement sont maintenus ouverts pendant les premiers tours de rotation.

4. Procédé selon l'une des revendications 1 à 3, caractérisé en ce que pour aider l'élaboration du mélange carburant-air les dispositifs d'admission sont ouverts avec une adaptation suivant le cas dans le sens d'une "ouverture retardée à l'admission".

5. Procédé selon l'une des revendications 1 à 4, caractérisé en ce que dans les phases de démarrage à froid et d'échauffement les sections de passage des dispositifs d'admission et/ou des dispositifs d'échappement sont réduites.
